# EUROPEAN PATENT SPECIFICATION

(11) **EP 4 287 387 B1**
(45) Date of publication and mention of the grant of the patent: **01.04.2026**
(21) Application number: 23757184.9
(22) Date of filing: 27.01.2023
(51) Int. Cl.: H01M 50/566, H01M 50/548, H01M 10/04, H01M 50/584, H01M 50/54, H01M 50/547, H01M 50/557, H01M 50/534, H01M 50/562, H01M 50/536, H01M 10/0585, H01M 50/528

(54) **ELECTRODE ASSEMBLY INCLUDING ELECTRODE TABS OF METALIZED FILM AND METAL CONNECTOR CONNECTING THEM, AND SECONDARY BATTERY COMPRISING THE SAME**
ELEKTRODENANORDNUNG MIT ELEKTRODENLASCHEN AUS METALLISIERTEM FILM UND METALLVERBINDER DAMIT SOWIE SEKUNDÄRBATTERIE DAMIT
ENSEMBLE D'ÉLECTRODES COMPRENANT DES LANGUETTES D'ÉLECTRODE DE FILM MÉTALLISÉ ET CONNECTEUR MÉTALLIQUE LES CONNECTANT, ET BATTERIE SECONDAIRE LE COMPRENANT

(30) Priority: 24.02.2022 KR 20220024689; 26.01.2023 KR 20230010153
(43) Date of publication of application: 06.12.2023
(73) Proprietor: LG Energy Solution Ltd., Seoul 07335 (KR)
(72) Inventor: KIM, Taejong, Daejeon 34122 (KR); LEE, Sang Myeon, Daejeon 34122 (KR)
(74) Representative: Plasseraud IP
(86) International application number: PCT/KR2023/001253
(87) International publication number: WO 2023/163388

(56) References cited:
- KR-A- 20170 095 072
- KR-A- 20210 021 949
- KR-A- 20210 061 113
- KR-B1- 101 851 485
- US-A1- 2008 292 952
- US-A1- 2016 248 074
- US-A1- 2019 157 684

## Description

### [TECHNICAL FIELD]

The present disclosure relates to an electrode assembly including electrode tabs of metalized film and a metal connector connecting them, and a secondary battery including the same.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Moreover, in recent years, the design itself of electronic devices has played a very important role in product selection by consumers, and the electronic devices have been gradually miniaturized and thinned according to the taste of consumer. Thereby, in order to minimize unnecessary waste of internal space of electronic devices, lithium secondary batteries are also required to be miniaturized and thinned, and the demand for them is increasing.

Among the components of such lithium secondary batteries, electrodes are generally manufactured by forming a positive electrode active material and a negative electrode active material on one or both sides of positive electrode (Al) and negative electrode (Cu) thin film current collectors, and stacking them in the order of a positive electrode, a separator, a negative electrode, and a separator.

At this time, recently, while increasing the number of layers to obtain a high energy density, the current collector is constituted more thinly, and the electrode active material layer is constituted more thickly, thereby increasing the rolling strength.

Thus, the thickness of the cell is increased and the thickness of the current collector is gradually reduced, thereby increasing the occurrence of disconnection defects in which the current collector or tabs protruding therefrom are broken.

In particular, in the case of a current collector and a tab made of aluminum foil, the elongation rate is low, which is more fatal in disconnection. In order to solve this problem, a metalized film is used in which metal is deposited or attached to a film such as polypropylene or polyterephthalate. In this case, it is difficult to electrically connect several layers of metallized films.

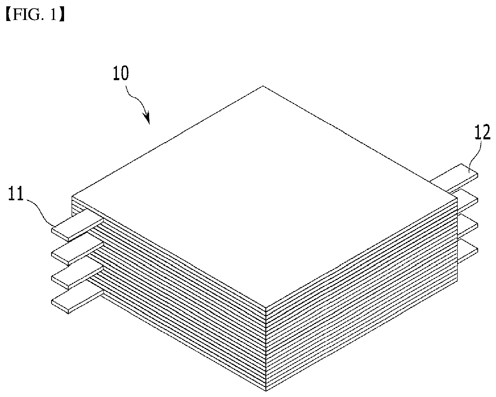

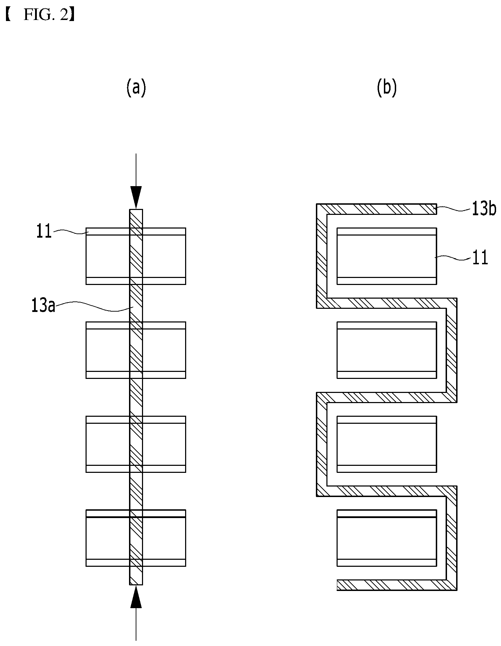

To explain this, FIG. 1 shows a conventional electrode assembly 10, and FIG. 2 shows how to electrically connect the tabs 11 of the metallized film of the electrode assembly 10 to each other.

First, referring to FIG. 1, a conventional electrode assembly 10 includes a positive electrode, a negative electrode, and a separator, wherein positive electrode tabs 11 protrude from the positive electrode, and negative electrode tabs 12 protrude from the negative electrode. At this time, the respective tabs 11 and 12 protrude at the same position.

At this time, when viewed from the front surface of the electrode assembly 10, the positive electrode tabs 11 are formed in a line as shown in FIG. 2.

At this time, the positive electrode tabs 11 have a structure in which a polymer is positioned in the center and metal is deposited or attached to both surfaces of the polymer. Thus, in order to electrically connect all of them, a metal rod 13a is penetrated through the positive electrode tab 11 as shown in FIG. 2(a), or the metal connectors 13b are connected in a zigzag pattern as shown in FIG. 2(b).

However, in this case, there is a problem that defects occur when the metal rod 13a is penetrated, or when the metal connector 13b is formed in a zigzag pattern, the connection process is complicated in the mass production stage, thereby reducing the production speed.

Therefore, there is an urgent need to develop a faster and easier technique for electrically connecting electrode tabs of a metallized film, which can solve the above problems and improve the production speed during mass production.

Document US 2019/157684 A1 and US 2008/292952 A1 relate to the connection of electrode tabs in an electrode assembly.

### [DETAILED DESCRIPTIO N OF THE INVENTION]

### [Technical Problem]

It is an object of the present disclosure to provide an electrode assembly having a structure which can improve the production speed by quickly performing electrical connection of the tabs in mass production while eliminating disconnection defects of the tabs, and a secondary battery including the same.

### [Technical Solution]

To solve this problem, the invention provides an electrode assembly according to claim 1.

The electrode assembly after the invention may present one or more feature(s) of dependent claims 2 to 13, in any combination allowed by the claims.

The invention also provides a secondary battery according to claim 14.

### [BRIEF DESCRIPTION OF THE DRAWINGS]

FIG. 1 is a perspective view schematically showing a conventional electrode assembly;
FIG. 2 is a schematic diagram showing a form in which electrode tabs of a conventional electrode assembly are connected with a metal connector;
FIG. 3 is a perspective view schematically showing an electrode assembly according to one embodiment of the present disclosure;
FIG. 4 is a schematic diagram showing a form in which electrode tabs of the electrode assembly of FIG. 3 are connected with a metal connector.
FIG. 5 is a schematic diagram showing the structure of an electrode tab according to one embodiment of the present disclosure;
FIG. 6 is a schematic diagram showing a form in which electrode tabs are connected with a metal connector in another embodiment of the present disclosure; and
FIG. 7 is a schematic diagram showing a form in which electrode tabs are connected with a metal connector in yet another embodiment of the present disclosure.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method the inventor knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present disclosure is not limited to the embodiments described below.

Hereinafter, the present disclosure will be described in detail with reference to the accompanying drawings and embodiments. The terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed.

Moreover, since the drawing is prepared without distinguishing a positive electrode and a negative electrode, the same names can be used therein, and even if used with the same names, they are distinguished by reference numerals.

According to one embodiment of the present disclosure, there is provided an electrode assembly for a secondary battery comprising two or more electrodes and one or more separators, wherein:
the two or more electrodes respectively comprise electrode tabs,
the electrode tabs are composed of a metallized film in which metal layers are formed on both surfaces of a polymer substrate,
the electrode tabs are arranged so as not to partially or wholly overlap in the stacking direction, and
the electrode tabs are electrically connected through a first metal connector at an upper portion where the metal layer is formed, and are electrically connected through a second metal connector at a lower portion where the metal layer is formed.

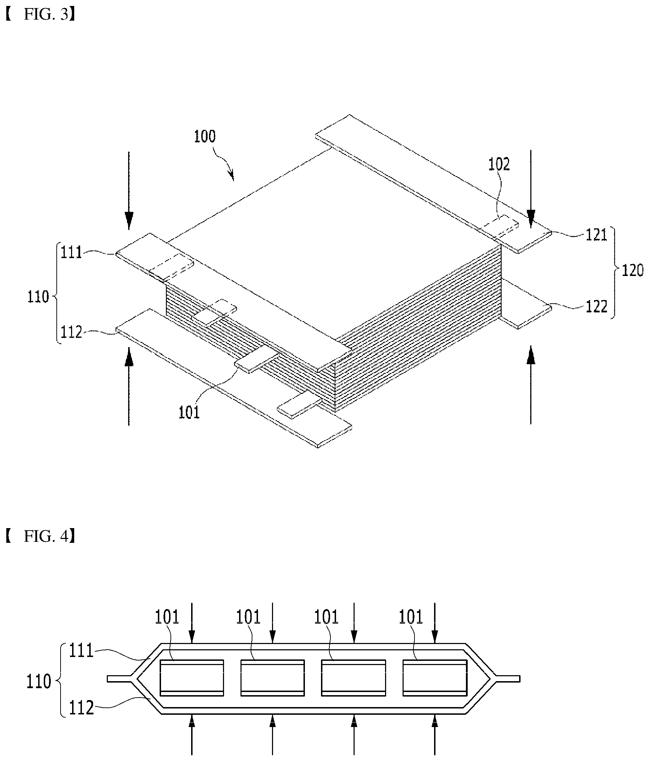

The connection structure between the electrode tabs and the metal connector in the present disclosure will be specifically described with reference to FIGS. 3 to 5.

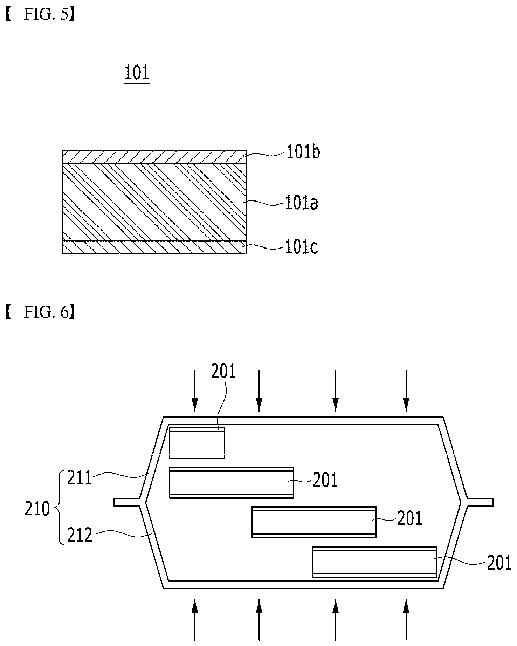

Specifically, FIG. 3 schematically shows a perspective view of an electrode assembly according to one embodiment of the present disclosure, FIG. 4 schematically shows a connection structure between the electrode tabs and the metal connector as an example, and FIG. 5 schematically shows the structure of an electrode tab.

Referring to FIG. 3, the electrode assembly 100 according to one embodiment of the present disclosure includes two or more electrodes and one or more separators, and each of the two or more electrodes respectively include electrode tabs 101 and 102.

The electrode tabs 101 are electrode tabs extending from the first electrode, and the electrode tabs 102 are electrode tabs extending from the second electrode.

At this time, all the electrode tabs 101 and 102 have a structure in which each tab is arranged so as to be exposed in the stacking direction, the electrode tabs 101 are electrically connected through a metal connector 110 composed of a first metal connector 111 and a second metal connector 112, and the electrode tabs 102 are electrically connected through a metal connector 120 composed of a first metal connector 121 and a second metal connector 122.

Here, the connection structure between the electrode tabs 101 and 102 and the metal connectors 110 and 120 will be discussed in more detail with reference to FIG. 4 together with FIG. 5 showing the structure of the electrode tabs 101.

FIG. 4 shows a connection structure between the electrode tabs 101 and the metal connector 110 as a representative example, and FIG. 5 shows a specific structure of the electrode tabs 101.

Referring to FIGS. 3 to 5 together, the electrode tabs 101 of the present disclosure are composed of a metallized film on which metal layers 101b and 101c are each formed on both surfaces of a polymer substrate 101a, and the electrode tabs 101 are electrically connected through the first metal connector 111 at the upper portion where the metal layer 101b is formed, and electrically connected through the second metal connector 112 at the lower portion where the metal layer 101c is formed.

Further, the first metal connector 111 and the second metal connector 112 have a structure in which they are connected directly and electrically to each other at positions not overlapping with the electrode tabs, more specifically, at both ends in the width direction of the electrode assembly, in other words, in the direction in which the electrode tabs are arranged.

At this time, the area where the first metal connector 111 and the second metal connector 112 are connected to each other may be 10% to 50% of the width of the electrode tabs 101. The electrode tabs 101 according to the present disclosure have a structure in which metal layers 101b and 101c are each formed on both surfaces of a polymer substrate 101a as described above. Therefore, the upper metal layer 101b and the lower metal layer 101c do not electrically communicate with each other. Therefore, since the electrical connection of the electrodes is achieved only when they are connected to each other, the metal connector 111 requires both the first metal connector 111 connected at the upper portion and the second metal connector 112 connected at the lower portion, and these first metal connector 111 and second metal connector 112 must have a structure in which they are electrically connected to each other.

Therefore, the area where the first metal connector 111 and the second metal connector 112 are connected may affect the amount and effect of energization of the electrode tabs. Therefore, if these connections are made with a too small an area outside the above range, the conductivity may be deteriorated, and if the connection is made with a too large area, the volume will increase more than necessary, which is thus not preferable.

Meanwhile, the thickness of each of the first metal connector 111 and the second metal connector 112 may be 10 to 1500 µm, specifically, 50 to 800 µm, and more specifically, 80 to 700 µm.

If the thickness is too thin outside the above range, there is a possibility that a disconnection occurs in the metal connector, and if the thickness is too thick, the overall volume may increase, which is thus not preferable.

Further, the metal connectors 110 and 120 may each be made of one or more materials selected from the group consisting of Ni, Cu, Al, stainless steel, alloys thereof, and materials coated with carbon or dissimilar metal on these metals. Specifically, they can be made of one or more materials selected from the group consisting of Ni, Cu, Al, and stainless steel, and most specifically, they can be appropriately selected in consideration of the metal layer included in the electrode tabs 101 and 102 to which the respective metal connectors 110 and 120 are connected.

In the above, the electrical connection of the metal connectors 110 and 120, the respective electrode tabs 101 and 102, and the first metal connector 111, the second metal connector 112 and the like is not limited as long as only electrical connections are performed by various methods. For example, it may be performed by welding or adhesion, and specifically, it may be performed by ultrasonic welding, laser welding or the like.

Meanwhile, the polymer substrate 101a forming the electrode tabs 101 may have a thickness of 3 µm to 20 µm, and specifically, a thickness of 6 µm to 12 µm.

If the thickness is too thin outside the above range, fracture or tearing may occur, and if it is too thick, the conductivity may decrease, which is thus not preferable.

Such a polymer substrate is not limited as long as it has chemical resistance to the electrolyte and does not cause chemical problems when used in a battery. For example, it may be made of one or more selected from the group consisting of polyolefin (PO), polyethylene terephthalate (PET), and cellulose, and specifically, it may be made of polypropylene (PP) or polyethylene terephthalate (PET).

Further, the metal layers 101b and 101c may each have a thickness of 0.2 µm to 3 µm, and specifically, a thickness of 0.5 µm to 2 µm.

If the thickness is too thin outside the above range, the conductivity may be reduced, and if it is too thick, the volume of the electrode tab may drop, which is thus not preferable.

The metal layers 101b and 101c may each be made of one or more materials selected from the group consisting of Ni, Cu, Al, stainless steel, alloys thereof, and materials coated with carbon or dissimilar metal on these metals. Specifically, they may be made of one or more materials selected from the group consisting of Ni, Cu, Al, and stainless steel, and most specifically, they may be made of the same material as the metal connector 110 among metals.

In the drawings above, a structure in which both the electrode tabs 101 and the electrode tabs 102 are composed of metallized films and are electrically connected by the metal connectors 110 and 120 is illustrated, but it goes without saying that only one of these can have the structure herein.

Meanwhile, since such a metallized film is overwhelmingly high in elongation rate and bending rate compared to tabs made of metal, it is free from disconnection defects that may generally occur.

However, due to its structure, since the polymer substrate is interposed in the center, there is a problem that electrical connection between the tabs is not performed by welding and fusing them to the lead at one time like the existing tabs.

Thus, as described above, conventionally, electrical connection between tabs has been performed as shown in FIG. 2, but this has a problem that the production speed is reduced during mass production.

In this regard, the present inventors have studied a method that solves the above problems and enables the electrode tabs to achieve electrical connection at one time in the similar manner as in the prior art, thus completing the invention.

For this purpose, the electrode tabs may be arranged so that they are all exposed in the stacking direction.

At this time, the respective electrode tabs may or may not overlap, and is not limited thereto.

The arrangement structure of these electrode tabs will be described with reference to FIGS. 4, 6 and 7.

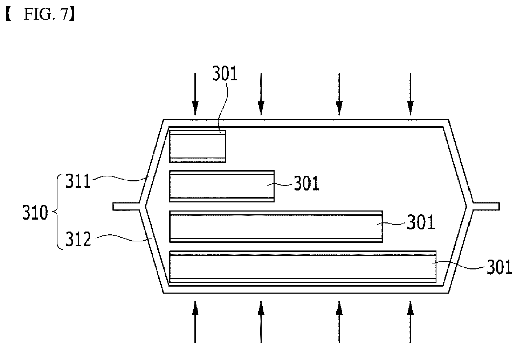

FIG. 4 is the same as described above, and FIGS. 6 and 7 are schematic diagrams each showing a form in which electrode tabs according to yet another embodiment of the present disclosure are connected by a metal connector.

As an example, referring to FIG. 4 again, the respective electrode tabs 101 may have the same size and may be arranged so as not to overlap each other in the stacking direction. Therefore, when viewed from the front, the electrode tabs 101 are arranged in parallel in a line, and the metal connector 110 can electrically connect them at the upper and lower portions.

Alternatively, as another example, referring to FIGS. 6 and 7, the respective electrode tabs 201 and 301 may be arranged so as to at least partially overlap with the electrode tabs adjacent to each other in the stacking direction, and they may be electrically connected by the metal connectors 210 and 310, specifically, by the first metal connectors 211 and 311 at the upper portion, and by the second metal connectors 212 and 312 at the lower portion. Further, the first metal connectors 211 and 311 and the second metal connectors 212 and 312 can be welded or adhered to each other to achieve electrical connection with the electrode tabs.

At this time, with regard to the overlapping form, the electrode tabs 201 and 301 can each have surfaces exposed in the stacking direction, and can have portions exposed in a stepwise form, thus being arranged so that at least a portion thereof overlaps.

However, if a part of the adjacent electrode tabs overlaps, the shape is not limited to those shown in FIGS. 6 and 7 and can be modified in various ways.

In addition, although not shown in the drawing, a part of the electrode tabs may be arranged so that the electrode tabs at least partially overlap with adjacent electrode tabs in the stacking direction, and the rest do not overlap with any electrode tabs in the stacking direction.

However, whenever the case may be, the area electrically connected to each of the electrode tabs of one or more metal connectors selected from the group consisting of the first metal connector and the second metal connector 112 is configured such that the area electrically connected to each electrode tab is more preferably 50% or more relative to the total area of each of the electrode tabs. In other words, it is preferable that a direct contact area between the electrode tabs and one or more metal connectors selected from the group consisting of the first metal connector and the second metal connector 112 is 50% or more.

Specifically, referring to FIG. 4 again, all of the electrode tabs 101 are electrically connected to the first metal connector 111 and the second metal connector 112 with 100% area. Meanwhile, referring to FIG. 5, the electrode tab positioned at the upper portion of the electrode tabs 201 is electrically connected to the first metal connector 211 over a 100% area. The electrode tabs at the second to fourth positions have a structure in which both the first metal connector 211 and the second metal connector 212 are connected with an area of 50% or more.

Further, referring to FIG. 6, in either case, as shown in FIGS. 4 to 6, all of the electrode tabs are preferably entirely covered from upper and lower portions by the first metal connector and the second metal connector.

Through this, the electrode tabs are not exposed to the outside and are entirely covered by the metal connector, thereby enhancing the conductivity.

Among the above configurations, considering the manufacturing processability of the electrode tab, economic efficiency, resistance during welding, etc., it is most preferable to manufacture in the form of FIG. 4 so that it is formed in the same size, the overall thickness is identical at any formation position of the electrode tab, and it can exert the effect intended by the present disclosure using the smallest amount.

Moreover, according to the present disclosure, by simply connecting the electrode lead to one or more selected from the group consisting of the first metal connector and the second metal connector, it is possible to achieve electrical connection of the entire electrode with external elements.

Meanwhile, according to yet another embodiment of the present disclosure, there is provided a secondary battery comprising the above-mentioned electrode assembly.

Specifically, it may be a secondary battery having a structure in which the electrode assembly is built into the secondary battery case together with the electrolyte.

The secondary battery may be specifically a lithium secondary battery.

Other components of the lithium secondary battery are widely known in the art, and thus, descriptions thereof are omitted herein.

### [Industrial Applicability]

The electrode assembly according to the present invention can eliminate tab disconnection problems using a metallized film having metal layers formed on both surfaces of a polymer substrate as an electrode tab, and also arranges the electrode tabs in parallel so that each is exposed in the stacking direction, whereby the electrode tabs can be electrically connected by a simpler method with a metal connector, thus greatly improving the production speed in mass production

## Claims

1. An electrode assembly (100) for a secondary battery comprising two or more electrodes and one or more separators, wherein:
the two or more electrodes respectively comprise electrode tabs (101, 102, 201, 301),
the electrode tabs (101, 102, 201, 301) are composed of a metallized film in which metal layers (101b, 101c) are formed on both surfaces of a polymer substrate (101a),
**characterized in that** the electrode tabs (101, 102, 201, 301) are arranged so as to partially or wholly not overlap in the stacking direction, and
the electrode tabs (101, 102, 201, 301) are electrically connected through a same first metal connector (111, 121, 211, 311) at an upper portion where the metal layer (101b) is formed, and are electrically connected through a same second metal connector (112, 122, 212, 312) at a lower portion where the metal layer (101c) is formed,
wherein the first metal connector (111, 121, 211, 311) and the second metal connector (112, 122, 212, 312) are further electrically connected to each other at positions where they are not overlapped with the electrode tabs,
wherein the first metal connector (111, 121, 211, 311) and the second metal connector (112, 122, 212, 312) are connected directly and electrically to each other at both ends in the width direction of the electrode assembly (100).

2. The electrode assembly (100) according to claim 1, wherein:
an area where the first metal connector (111, 121, 211, 311) and the second metal connector (112, 122, 212, 312) are connected to each other is 10% to 50% of a width of the electrode tabs (101, 102, 201, 301).

3. The electrode assembly (100) according to any one according to claim 1 or 2, wherein:
electrical connection between the first metal connector (111, 121, 211, 311) and the second metal connector (112, 122, 212, 312) are performed by welding or adhesion.

4. The electrode assembly (100) according to claim 1, wherein:
the respective electrode tabs (101, 102, 201, 301) are arranged so as not to overlap each other in the stacking direction.

5. The electrode assembly (100) according to claim 1, wherein:
the respective electrode tabs (101, 102, 201, 301) are arranged so as to at least partially overlap with adjacent electrode tabs (101, 102, 201, 301) in the stacking direction.

6. The electrode assembly (100) according to claim 1, wherein:
a part of the electrode tabs (101, 102, 201, 301) at least partially overlap with adjacent electrode tabs (101, 102, 201, 301) in the stacking direction, and the rest are arranged so as not to overlap with any electrode tabs (101, 102, 201, 301) in the stacking direction.

7. The electrode assembly (100) according to any one of claims 4 to 6, wherein:
one or more metal connectors selected from the group consisting of the first metal connector (111, 121, 211, 311) and the second metal connector (112, 122, 212, 312) are configured such that an area electrically connected to each electrode tab (101, 102, 201, 301) is 50% or more relative to the total area of each electrode tab (101, 102, 201, 301).

8. The electrode assembly (100) according to claim 1, wherein:
all of the electrode tabs (101, 102, 201, 301) are entirely covered at upper and lower portions by the first metal connector (111, 121, 211, 311) and the second metal connector (112, 122, 212, 312).

9. The electrode assembly (100) according to claim 1, wherein:
the polymer substrate constituting the electrode tabs (101, 102, 201, 301) is made of one or more selected from the group consisting of polyolefin (PO), polyethylene terephthalate (PET), and cellulose.

10. The electrode assembly (100) according to claim 1, wherein:
the metal layer constituting the electrode tabs (101, 102, 201, 301) is made of one or more materials selected from the group consisting of Ni, Cu, Al, and stainless steel.

11. The electrode assembly (100) according to claim 1, wherein:
the first metal connector (111, 121, 211, 311) and the second metal connector (112, 122, 212, 312) are each made of one or more materials selected from the group consisting of Ni, Cu, Al, and stainless steel.

12. The electrode assembly (100) according to claim 1, wherein:
the first metal connector (111, 121, 211, 311) and the second metal connector (112, 122, 212, 312) and the metal layers of the electrode tabs (101, 102, 201, 301) are made of the same material.

13. The electrode assembly (100) according to claim 1, wherein:
one or more selected from the group consisting of the first metal connector (111, 121, 211, 311) and the second metal connector (112, 122, 212, 312) is connected to an electrode lead.

14. A secondary battery comprising the electrode assembly (100) as set forth in claim 1.

## Patentansprüche

1. Elektrodenanordnung (100) für eine Sekundärbatterie, welche zwei oder mehr Elektroden und einen oder mehrere Separatoren umfasst, wobei:
die zwei oder mehr Elektroden jeweils Elektrodenlaschen (101, 102, 201, 301) umfassen,
die Elektrodenlaschen (101, 102, 201, 301) aus einer metallischen Folie aufgebaut sind, in welcher Metallschichten (101b, 101c) auf beiden Flächen eines Polymersubstrats (101a) gebildet sind,
**dadurch gekennzeichnet, dass** die Elektrodenlaschen (101, 102, 201, 301) derart angeordnet sind, dass sie in der Stapelrichtung teilweise oder vollständig nicht überlappen, und
die Elektrodenlaschen (101, 102, 201, 301) an einem oberen Abschnitt, in welchem die Metallschicht (101b) gebildet ist, durch einen gleichen ersten Metallverbinder (111, 121, 211, 311) elektrisch verbunden sind und an einem unteren Abschnitt, in welchem die Metallschicht (101c) gebildet ist, durch einen gleichen zweiten Metallverbinder (112, 122, 212, 312) elektrisch verbunden sind,
wobei der erste Metallverbinder (111, 121, 211, 311) und der zweite Metallverbinder (112, 122, 212, 312) ferner an Stellen, an welchen sie nicht mit den Elektrodenlaschen überlappen, elektrisch miteinander verbunden sind,
wobei der erste Metallverbinder (111, 121, 211, 311) und der zweite Metallverbinder (112, 122, 212, 312) in der Breitenrichtung der Elektrodenanordnung (100) direkt und elektrisch miteinander verbunden sind.

2. Elektrodenanordnung (100) nach Anspruch 1, wobei:
eine Fläche, in welcher der erste Metallverbinder (111, 121, 211, 311) und der zweite Metallverbinder (112, 122, 212, 312) miteinander verbunden sind, 10 % bis 50 % einer Breite der Elektrodenlaschen (101, 102, 201, 301) beträgt.

3. Elektrodenanordnung (100) nach Anspruch 1 oder 2, wobei:
eine elektrische Verbindung zwischen dem ersten Metallverbinder (111, 121, 211, 311) und dem zweiten Metallverbinder (112, 122, 212, 312) durch Schweißen oder Kleben durchgeführt werden.

4. Elektrodenanordnung (100) nach Anspruch 1, wobei:
die jeweiligen Elektrodenlaschen (101, 102, 201, 301) derart angeordnet sind, dass sie in der Stapelrichtung einander nicht überlappen.

5. Elektrodenanordnung (100) nach Anspruch 1, wobei:
die jeweiligen Elektrodenlaschen (101, 102, 201, 301) derart angeordnet sind, dass sie in der Stapelrichtung wenigstens teilweise mit benachbarten Elektrodenlaschen (101, 102, 201, 301) überlappen.

6. Elektrodenanordnung (100) nach Anspruch 1, wobei:
ein Teil der Elektrodenlaschen (101, 102, 201, 301) in der Stapelrichtung wenigstens teilweise mit benachbarten Elektrodenlaschen (101, 102, 201, 301) überlappt und der Rest derart angeordnet ist, dass er in der Stapelrichtung nicht mit jeglichen Elektrodenlaschen (101, 102, 201, 301) überlappt.

7. Elektrodenanordnung (100) nach einem der Ansprüche 4 bis 6, wobei:
ein oder mehrere Metallverbinder, ausgewählt aus der Gruppe, bestehend aus dem ersten Metallverbinder (111, 121, 211, 311) und dem zweiten Metallverbinder (112, 122, 212, 312), derart eingerichtet sind, dass eine Fläche, welche elektrisch mit jeder Elektrodenlasche (101, 102, 201, 301) verbunden ist, relativ zu der Gesamtfläche jeder Elektrodenlasche (101, 102, 201, 301) 50 % oder mehr beträgt.

8. Elektrodenanordnung (100) nach Anspruch 1, wobei:
alle Elektrodenlaschen (101, 102, 201, 301) an oberen und unteren Abschnitten vollständig durch den ersten Metallverbinder (111, 121, 211, 311) und den zweiten Metallverbinder (112, 122, 212, 312) abgedeckt sind.

9. Elektrodenanordnung (100) nach Anspruch 1, wobei:
das Polymersubstrat, welches die Elektrodenlaschen (101, 102, 201, 301) konstituiert, aus einem oder mehreren hergestellt ist, ausgewählt aus der Gruppe, bestehend aus Polyolefin (PO), Polyethylenterephthalat (PET) und Cellulose.

10. Elektrodenanordnung (100) nach Anspruch 1, wobei:
die Metallschicht, welche die Elektrodenlaschen (101, 102, 201, 301) konstituiert, aus einem oder mehreren Materialien hergestellt ist, ausgewählt aus der Gruppe, bestehend aus Ni, Cu, Al und rostfreiem Stahl.

11. Elektrodenanordnung (100) nach Anspruch 1, wobei:
der erste Metallverbinder (111, 121, 211, 311) und der zweite Metallverbinder (112, 122, 212, 312) jeweils aus einem oder mehreren Materialien hergestellt sind, ausgewählt aus der Gruppe, bestehend aus Ni, Cu, Al und rostfreiem Stahl.

12. Elektrodenanordnung (100) nach Anspruch 1, wobei:
der erste Metallverbinder (111, 121, 211, 311) und der zweite Metallverbinder (112, 122, 212, 312) sowie die Metallschichten der Elektrodenlaschen (101, 102, 201, 301) aus dem gleichen Material hergestellt sind.

13. Elektrodenanordnung (100) nach Anspruch 1, wobei:
einer oder mehrere, ausgewählt aus der Gruppe, bestehend aus dem ersten Metallverbinder (111, 121, 211, 311) und dem zweiten Metallverbinder (112, 122, 212, 312), mit einer Elektrodenleitung verbunden ist.

14. Sekundärbatterie, umfassend die Elektrodenanordnung (100) nach Anspruch 1.

## Revendications

1. Ensemble d'électrodes (100) pour une batterie secondaire comprenant deux électrodes ou plus et un ou plusieurs séparateurs, dans lequel :
les deux électrodes ou plus comprennent respectivement des pattes d'électrode (101, 102, 201, 301),
les pattes d'électrode (101, 102, 201, 301) sont composées d'un film métallisé dans lequel des couches métalliques (101b, 101c) sont formées sur les deux surfaces d'un substrat polymère (101a),
**caractérisé en ce que** les pattes d'électrode (101, 102, 201, 301) sont agencées de manière à ne pas se chevaucher partiellement ou totalement dans la direction d'empilement, et
les pattes d'électrode (101, 102, 201, 301) sont connectées électriquement par le biais d'un même premier connecteur métallique (111, 121, 211, 311) au niveau d'une partie supérieure où la couche métallique (101b) est formée, et sont connectées électriquement par le biais d'un même deuxième connecteur métallique (112, 122, 212, 312) au niveau d'une partie inférieure où la couche métallique (101c) est formée,
dans lequel le premier connecteur métallique (111, 121, 211, 311) et le deuxième connecteur métallique (112, 122, 212, 312) sont en outre connectés électriquement l'un à l'autre à des positions où ils ne sont pas chevauchés par les pattes d'électrode, dans lequel le premier connecteur métallique (111, 121, 211, 311) et le deuxième connecteur métallique (112, 122, 212, 312) sont connectés directement et électriquement l'un à l'autre aux deux extrémités dans la direction de largeur de l'ensemble d'électrodes (100).

2. Ensemble d'électrodes (100) selon la revendication 1, dans lequel :
une surface où le premier connecteur métallique (111, 121, 211, 311) et le deuxième connecteur métallique (112, 122, 212, 312) sont connectés l'un à l'autre représente 10 % à 50 % d'une largeur des pattes d'électrode (101, 102, 201, 301).

3. Ensemble d'électrodes (100) selon l'une quelconque des revendications 1 ou 2, dans lequel :
une connexion électrique entre le premier connecteur métallique (111, 121, 211, 311) et le deuxième connecteur métallique (112, 122, 212, 312) est réalisée par soudage ou collage.

4. Ensemble d'électrodes (100) selon la revendication 1, dans lequel :
les pattes d'électrode (101, 102, 201, 301) respectives sont agencées de manière à ne pas se chevaucher dans la direction d'empilement.

5. Ensemble d'électrodes (100) selon la revendication 1, dans lequel :
les pattes d'électrode (101, 102, 201, 301) respectives sont agencées de manière à chevaucher au moins partiellement des pattes d'électrode (101, 102, 201, 301) adjacentes dans la direction d'empilement.

6. Ensemble d'électrodes (100) selon la revendication 1, dans lequel :
une partie des pattes d'électrode (101, 102, 201, 301) chevauche au moins partiellement des pattes d'électrode (101, 102, 201, 301) adjacentes dans la direction d'empilement, et le reste est agencé de manière à ne chevaucher aucune patte d'électrode (101, 102, 201, 301) dans la direction d'empilement.

7. Ensemble d'électrodes (100) selon l'une quelconque des revendications 4 à 6, dans lequel :
un ou plusieurs connecteurs métalliques sélectionnés dans le groupe consistant en le premier connecteur métallique (111, 121, 211, 311) et le deuxième connecteur métallique (112, 122, 212, 312) sont configurés de sorte qu'une surface connectée électriquement à chaque patte d'électrode (101, 102, 201, 301) représente 50 % ou plus par rapport à la surface totale de chaque patte d'électrode (101, 102, 201, 301).

8. Ensemble d'électrodes (100) selon la revendication 1, dans lequel :
toutes les pattes d'électrode (101, 102, 201, 301) sont entièrement recouvertes au niveau des parties supérieure et inférieure par le premier connecteur métallique (111, 121, 211, 311) et le deuxième connecteur métallique (112, 122, 212, 312).

9. Ensemble d'électrodes (100) selon la revendication 1, dans lequel :
le substrat polymère constituant les pattes d'électrode (101, 102, 201, 301) est constitué d'un ou plusieurs éléments sélectionnés dans le groupe consistant en polyoléfine (PO), polyéthylène téréphtalate (PET) et cellulose.

10. Ensemble d'électrodes (100) selon la revendication 1, dans lequel :
la couche métallique constituant les pattes d'électrode (101, 102, 201, 301) est constituée d'un ou plusieurs matériaux sélectionnés dans le groupe consistant en Ni, Cu, Al et acier inoxydable.

11. Ensemble d'électrodes (100) selon la revendication 1, dans lequel :
le premier connecteur métallique (111, 121, 211, 311) et le deuxième connecteur métallique (112, 122, 212, 312) sont chacun constitués d'un ou plusieurs matériaux sélectionnés dans le groupe consistant en Ni, Cu, Al et acier inoxydable.

12. Ensemble d'électrodes (100) selon la revendication 1, dans lequel :
le premier connecteur métallique (111, 121, 211, 311) et le deuxième connecteur métallique (112, 122, 212, 312) et les couches métalliques des pattes d'électrode (101, 102, 201, 301) sont constitués du même matériau.

13. Ensemble d'électrodes (100) selon la revendication 1, dans lequel :
un ou plusieurs éléments sélectionnés dans le groupe consistant en le premier connecteur métallique (111, 121, 211, 311) et le deuxième connecteur métallique (112, 122, 212, 312) sont connectés à un fil d'électrode.

14. Batterie secondaire comprenant l'ensemble d'électrodes (100) selon la revendication 1.
